# EUROPÄISCHE PATENTANMELDUNG

(11) **EP 4 120 432 A2**
(43) Veröffentlichungstag der Anmeldung: **18.01.2023**
(21) Anmeldenummer: 22182536.7
(22) Anmeldetag: 01.07.2022
(51) Int. Cl.: H01M 10/61, H01M 10/625, H01M 10/6554, H01M 50/103

(54) **ENERGIESPEICHERVORRICHTUNG MIT EINEM BATTERIE-ZELLENMODUL UND EINER FOLIENKÜHLEINRICHTUNG, VORZUGSWEISE FÜR EIN ZUMINDEST TEILWEISE ELEKTRISCH ANGETRIEBENES FAHRZEUG, UND VERFAHREN ZUR HERSTELLUNG DER ENERGIESPEICHERVORRICHTUNG**

(30) Priorität: 13.07.2021 DE 102021118016
(71) Anmelder: MAN Truck & Bus SE, 80995 München (DE)
(72) Erfinder: Bucher, Simon, 80995 München (DE); Klauke, Michael, 80995 München (DE)
(74) Vertreter: v. Bezold & Partner Patentanwälte - PartG mbB

(57) **Zusammenfassung**

Die Erfindung betrifft eine Energiespeichervorrichtung zur Speicherung elektrischer Energie, vorzugsweise für ein zumindest teilweise elektrisch angetriebenes Fahrzeug. Die Erfindung betrifft ferner ein Verfahren zur Herstellung einer Energiespeichervorrichtung und ein Fahrzeug, vorzugsweise ein Nutzfahrzeug, mit einer solchen Energiespeichervorrichtung. Die Energiespeichervorrichtung (1) weist eine Mehrzahl von stapelartig nebeneinander angeordneten Speicherzellen (3, 4, 5) und eine Kühlvorrichtung (6) zur Kühlung der Speicherzellen (3, 4, 5) auf. Die Kühlvorrichtung (6) weist eine mit einem Kühlmittel durchströmbare Kühlplatte (7) auf, die seitlich, vorzugsweise bodenseitig, in Bezug auf die Speicherzellen (3, 4, 5) angeordnet ist. Die Kühlvorrichtung (6) weist ferner eine mit dem Kühlmittel durchströmbare, einteilig ausgeführte Folienkühleinrichtung (9) zur Seitenflächenkühlung der Speicherzellen (3, 4, 5) auf, die mehrere Kühlkörper (8) ausbildet. Zwischen zwei benachbarten Speicherzellen (3, 4, 5) ist jeweils einer der mehreren Kühlkörper (8) angeordnet. Die Kühlkörper (8) stehen mit der Kühlplatte (7) fluidisch in Verbindung und sind als Kühlkörper (8) mit einer elastischen Hülle (9) ausgebildet.

## Beschreibung

Die Erfindung betrifft eine Energiespeichervorrichtung zur Speicherung elektrischer Energie, vorzugsweise für ein zumindest teilweise elektrisch angetriebenes Fahrzeug. Die Erfindung betrifft ferner ein Verfahren zur Herstellung einer Energiespeichervorrichtung und ein Fahrzeug, vorzugsweise ein Nutzfahrzeug, mit einer solchen Energiespeichervorrichtung.

Aus der Praxis bekannte Fahrzeugbatterien, wie sie z. B. als Energiespeicher bzw. als Traktionsbatterie in Hybridfahrzeugen oder Elektrofahrzeugen zum Einsatz kommen, verfügen typischerweise über ein Batteriepack, in dem mehrere stapelartig angeordnete Batterie-Speicherzellen angeordnet sind. Die Batterie-Speicherzellen können zu Modulen zusammengefasst sein oder im Rahmen einer sog. cell-to-pack, CTP-Technologie direkt in ein Batteriepack eingebaut sein. Um einen ordnungsgemäßen Betrieb sicherzustellen und eine Beschädigung einer solchen Fahrzeugbatterie zu vermeiden sowie um eine möglichst lange Lebensdauer zu erreichen, muss diese in einem definierten Temperaturbereich betrieben werden. Hier ist es beispielsweise aus dem Stand der Technik bekannt, unterhalb der Batteriezellen eine Kühlplatte, optional mit einer darauf aufgebrachten Wärmeleitpaste, anzuordnen, die von einem Kühlfluid durchströmt wird, um die Batteriezellen zu kühlen. In diesen bekannten Lösungen wird typischerweise die flächenmäßig wesentlich kleinere, der Kühlplatte zugewandte Zellunterseite der Speicherzellen gekühlt, während die flächenmäßige wesentlich größeren Seitenflächen der Speicherzellen ungekühlt bleibt. Es ergibt sich nachteilhaft eine stark inhomogene Temperaturverteilung innerhalb der Speicherzellen und z. B. innerhalb der Batterie-Zellenmodule.

Aus dem Stand der Technik ist es ferner bekannt, dass das Ableiten von in den Batteriezellen entstehender Wärme mittels Kühlfinnen verbessert werden kann. So schlägt beispielsweise die Offenlegungsschrift DE 10 2012 218 764 A1 vor, jeweils eine Kühlfinne über einen flächigen Grundkörper thermisch mit der Seite einer Batterie-Speicherzelle zu koppeln, wobei der Grundkörper einen Kühlkanal aufweist. Die Leistungsfähigkeit dieser Lösung ist dabei in nachteilhafter Weise durch den Wärmeübergang, bzw. durch den Wärmeübergangskoeffizienten, der Kontaktfläche zwischen Kühlfinne und Grundkörper begrenzt. Ferner ermöglichen die Kühlfinnen lediglich eine passive Kühlung der Speicherzellen, woraus nachteilhaft ein Zeitverzug bei einer Wärmeeinleitung und Wärmeausleitung, eine inhomogene Temperaturverteilung und eine geringe Kühlleistung resultiert.

Die Aufgabe der vorliegenden Erfindung ist es, eine Technik zur Temperierung, insbesondere zur Kühlung, von derartigen Energiespeichervorrichtungen bereitzustellen, mit der Nachteile bekannter Ansätze zur Temperierung, insbesondere zur Kühlung, vermieden werden können. Die Aufgabe der Erfindung ist es insbesondere, bekannte Energiespeichervorrichtungen hinsichtlich der Leistungsfähigkeit der Kühlung der Speicherzellen zu verbessern.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Ein Grundgedanke der Erfindung besteht darin, zusätzliche Kühlkörper im Zwischenraum zwischen den nebeneinander angerordneten Batteriezellen vorzusehen, die aktiv gekühlt werden und hierzu mit der Kühlplatte, die seitlich, z. B. bodenseitig, in Bezug auf die Batteriezellen angeordnet ist, fluidisch verbunden sind. Dies bietet den Vorzug einer besonders effektiven Kühlung, die eine möglichst homogene Temperaturverteilung innerhalb der Batteriezelle bewirkt. Die Kühlkörper sind hierbei nicht als separate, voneinander getrennte Baueinheiten ausgebildet, sondern werden durch eine einteilig bzw. durchgängig ausgeführte Folienkühleinrichtung ausgebildet. Diese Kühlkörper sind mit zumindest einer elastischen Hülle ausgebildet, d. h. die Kühlkörper können als sog. Folienkühlkörper oder Pouch-Kühlkörper ausgebildet sein. Dies bietet den zusätzlichen Vorzug, dass sich die Kühlkörper besonders gut an sich verändernde Oberflächenformen der Batterie-Zellen, z. B. bedingt durch sog. Swelling-Effekte, anpassen können. Zudem können die elastischen Kühlkörper u. a. Montage- und Bauteiltoleranzen kompensieren.

Entsprechend wird gemäß einem ersten allgemeinen Gesichtspunkt der Erfindung eine Energiespeichervorrichtung zur Speicherung elektrischer Energie bereitgestellt. Vorzugsweise handelt es sich um eine Energiespeichervorrichtung für ein zumindest teilweise elektrisch angetriebenes Fahrzeug. Die Energiespeichervorrichtung weist eine Mehrzahl von stapelartig nebeneinander angeordneten Speicherzellen (Batteriespeicherzellen) und eine Kühlvorrichtung zur Kühlung der Speicherzellen auf. Die Kühlvorrichtung weist eine Kühlplatte auf, die mit einem Kühlmittel durchströmbar ist. Die Kühlplatte ist seitlich, vorzugsweise bodenseitig, in Bezug auf die Speicherzellen angeordnet.

Die Kühlvorrichtung weist ferner eine mit dem Kühlmittel durchströmbare, einteilig ausgeführte Kühleinrichtung zur Seitenflächenkühlung der Speicherzellen auf, die mehrere Kühlkörper ausbildet. Die Kühleinrichtung ist bevorzugt durch ein einzelnes Folienelement ausgebildet, d. h. durch ein und dasselbe, durchgängige Folienelement ausgebildet, das die elastischen Hüllen der Kühlkörper ausbildet. Aus diesem Grund wird diese Kühleinrichtung in diesem Dokument auch als Folienkühleinrichtung bezeichnet. Auf diese Weise kann eine einteilige Konstruktion zur Realisierung der mehreren Kühlköper erzielt werden. Hierbei ist zwischen zwei benachbarten Speicherzellen jeweils mindestens einer, vorzugsweise genau einer, der mehreren Kühlkörper angeordnet. Die Kühlkörper stehen mit der Kühlplatte fluidisch in Verbindung und sind als Kühlkörper mit mindestens einer elastischen Hülle ausgebildet.

Die vorgeschlagene Energiespeichervorrichtung birgt gegenüber den bekannten Lösungen mehrere Vorteile. Durch die vorgeschlagene fluidische Verbindung zwischen den Kühlkörpern und der Kühlplatte ist eine besonders hohe Kühlleistung im Zwischenraum zwischen Speicherzellen erreichbar. Ferner ermöglichen die Kühlkörper mit elastischer Hülle eine adaptive flächige, formkorrespondierende Anlage der Kühlkörper an den Seitenflächen der Speicherzellen, wodurch ein besonders guter Wärmeübergang zwischen den Speicherzellen und den Kühlkörpern ermöglicht wird, der durch die elastische Hülle auch bei einer Ausdehnung oder Zusammenziehen der Speicherzellen aufrechterhalten werden kann.

Die einteilig ausgeführte Folienkühleinrichtung, die die mehreren Kühlkörper ausbildet, bietet den besonderen Vorzug, dass die Folienkühleinrichtung gleichzeitig eine Dichtfunktion zwischen den Kühlkörpern und der Kühlplatte übernehmen kann, sodass Dichtlippen an den Übergängen zwischen Kühlkörpern und Kühlplatte zumindest teilweise entfallen können. Da die Kühlkörper zudem durch nur eine durchgängige Folienkühleinrichtung ausgebildet werden, reduziert sich die Teileanzahl und damit der technische Aufwand. Dies birgt Kosten-, Gewicht- und Packaging- und Montage-Vorteile.

Ferner können die Kühlkörper durch ihre elastische Hülle optional die Funktion von in der Praxis zwischen den Speicherzellen angeordneten Kompressionsschichten (sog. "compression-" oder "swelling"-pads) übernehmen, die in der Praxis zwischen den Speicherzellen angeordnet werden, um ein thermisches Ausdehnen und Zusammenziehen der Speicherzellen ausgleichen und eine konstante Flächenpressung zwischen den Speicherzellen zu garantieren. Zusätzlich können die Kühlkörper die Funktion thermischer Isolationskissen (sog. "thermal insulation pads) übernehmen und diese zumindest teilweise ersetzen. Ferner ergibt sich vorteilhaft, dass eine Ausdehnung der Speicherzellen nicht zu einem progressiven Ansteigen der Flächenpressung führt oder dies zumindest reduziert wird. Innerhalb der Energiespeichervorrichtung wirkt insofern eine möglichst konstante Pressung durch den Kühlmitteldruck. Ferner resultiert aus der Kühlung der Speicherzellen-Zwischenräume eine hohe Wärmekapazität und eine Verzugszeit für thermische Alterungs- und Schädigungseffekte.

Die Wandstärke der Folienkühleinrichtung und insbesondere der Kühlkörper kann dabei lediglich beispielhaft in einem Bereich zwischen 0,05 mm bis 0,2 mm, besonders bevorzugt bei ca. 0,1 mm liegen. Jeder der Kühlkörper kann ebenfalls mit dem Kühlmittel durchströmbar sein und kann dazu z. B. ebenfalls in seinem Innenvolumen entsprechende Fluidführungskanäle aufweisen. Jeweils einer der Kühlkörper kann beispielsweise derart zwischen zwei benachbarten Speicherzellen angeordnet sein, dass in Stapelrichtung Kühlkörper und Speicherzellen abwechselnd aufeinander folgen. Bevorzugt liegen die Kühlkörper jeweils an den sich zugewandten Seitenflächen von benachbarten Speicherzellen flächig an, sodass ein Wärmeaustausch zwischen Speicherzellen und Kühlkörper stattfinden kann. Dazu können die Kühlkörper beispielsweise dazu ausgebildet sein, die durch die Speicherzellen abgegebene Wärme aufzunehmen und über das durch die Kühlplatte strömende Kühlmittel abzuleiten. Kühlmittel kann von der Kühlplatte in die Kühlkörper und von diesem zurück in die Kühlplatte treten. Dazu können die Kühlkörper beispielsweise einen oder mehrere Kühlmitteleingänge und einen oder mehrere Kühlmittelausgänge aufweisen, über welche Kühlmittel von der Kühlplatte in die Kühlkörper und von diesen zurück in die Kühlplatte fließen kann.

Vorstehend wurde festgestellt, dass die Kühlkörper als Kühlkörper eine elastische Hülle aufweisen, die durch die Folienkühleinrichtung ausgebildet wird. Der Begriff "elastisch", wie er im Sinn der vorliegenden Erfindung verstanden wird, weist darauf hin, dass das Material der Hülle verformbar (biegsam) und/oder flexibel ist. Die Hülle kann entsprechend aus elastischem Material ausgeführt sein, um sich bestmöglich an das temperaturbedingt veränderbare Volumen und Geometrie der Speicherzelle anpassen zu können.

Die Energiespeichervorrichtung kann in an sich bekannterweise dazu ausgebildet sein, elektrische Energie zu speichern, die in entsprechenden Antriebskomponenten des Fahrzeugs, z. B. in einer E-Maschine, in Antriebsenergie gewandelt werden kann. Anders ausgedrückt kann die Energiespeichervorrichtung zur temporären Aufnahme von Traktionsenergie ausgebildet sein.

Die Speicherzellen können zu einem Modul (Batterie-Zellenmodul) zusammengefasst und vorzugsweise vorgruppiert sein. Das Batterie-Zellenmodul kann neben dem Speicherzellen-Verbund an sich optional zusätzlich auch weitere zur Speicherung elektrischer Energie notwendige und an sich bekannte Komponenten umfassen, wie beispielsweise Platinen, Schaltungen, Relais, Leitungen, Grund- oder Endplatten, Busbars, Terminals, Deck- oder Seitenabdeckungen, Kunststoffplatten und/oder Leiterplatten etc.

Alternativ können die Speicherzellen auch im Rahmen einer sog. cell-to-pack, Technologie direkt in ein Batteriepack verbaut sein. Es wird hierbei auf die Vorgruppierung der Zellen über ein Batteriemodul verzichtet und die Montage der Speicherzellen erfolgt direkt im Batteriepack. Cell-to-Pack-Technologien kommen in jüngerer Zeit vermehrt zum Einsatz, um die Massenenergiedichte zu erhöhen, um die Effizienz der Volumenausnutzung zu verbessern und um die Anzahl der Teile für Batteriepacks zu reduzieren - im Vergleich zu herkömmlichen, aus vorgruppierten Batterie-Zellenmodulen zusammengesetzten Batteriepacks.

Die Speicherzellen können parallel und/oder seriell miteinander verschaltet sein und zu einem Zellenverbund zusammengefasste Einzel-Speicherzellen aufweisen. Die Speicherzellen können z. B. als Lithium-Ionen-Akkumulator ausgebildet sein. Die Zellen können vorzugsweise mit einem Spalt von 0,5 bis 1,5 mm zueinander beabstandet sein.

Unter dem Begriff der Kühlung ist vorzugsweise, aber nicht ausschließlich, die Abfuhr von Wärme der Speicherzellen zu verstehen. Es ist nämlich auch denkbar, dass die Kühlvorrichtung - insbesondere bei niedrigen Temperaturen oder beim Kaltstart des Fahrzeugs - zur Erwärmung oder Vorwärmung der Speicherzellen dient, bspw. um die Speicherzellen auf Betriebstemperatur zu bringen oder zu halten. Die Kühlvorrichtung kann somit allgemein als Temperiervorrichtung der Speicherzellen dienen.

Die Kühlplatte kann z. B. in ihrem Innenvolumen entsprechende Fluidführungskanäle aufweisen. Sind Speicherzellen zu einem Batterie-Zellenmodul angeordnet, kann die Kühlplatte an einer Seitenfläche des Batterie-Zellenmoduls angeordnet sein. Bei der Seitenfläche kann es sich um die Bodenfläche (untere Seitenfläche) des Batterie-Zellenmoduls handeln. In anderen Worten ist die Kühlplatte dazu ausgebildet, z. B. die durch die Speicherzellen abgestrahlte Wärme aufzunehmen und die Wärme über das durch die Kühlplatte strömende Kühlmittel abzuleiten oder Wärme an die Speicherzelle abzugeben.

Gemäß einer besonders vorteilhaften Ausführungsform können die Kühlkörper als stapelartig angeordnete, zueinander beabstandete Taschen der Folienkühleinrichtung ausgebildet sein. Beispielsweise sind die Taschen parallel zueinander angeordnet und/oder erstrecken sich in senkrechter Richtung von der Kühlplatte weg. Die Abstände zwischen je zwei benachbarten Taschen entspricht vorzugsweise der räumlichen Ausdehnung der Speicherzellen in Stapelrichtung.

Gemäß einem weiteren Aspekt kann die Kühlplatte eine den Speicherzellen zugewandte ersten Wandung und eine den Speicherzellen abgewandte zweite Wandung aufweisen. Die zweite Wandung ist vorzugsweise halbschalenförmig ausgebildet. Die Kühlplatte kann somit aus der ersten Wandung und der zweiten Wandung zusammengesetzt sein. Weiter vorzugsweise ist die zweite Wandung an der ersten Wandung derart befestigt, dass die erste Wandung und die halbschalenförmige zweite Wandung ein Innenvolumen einschließen, das für das Kühlmittel einen Fluidführungskanal der Kühlplatte ausbildet.

Gemäß einer Weiterbildung des letztgenannten Aspekts kann die Folienkühleinrichtung an einer den Speicherzellen abgewandten Seite der ersten Wandung abschnittsweise flächig anliegen. Ferner kann die erste Wandung eine Schlitzstruktur aufweisen, wobei sich jeweils ein Kühlkörper durch einen Schlitz der Schlitzstruktur auf eine den Speicherzellen zugewandte Seite der ersten Wandung erstreckt. Da die Kühlkörper nicht als voneinander getrennte Bauteile ausgeführt sind, sondern als Taschen einer einteilig ausgeführten Folienkühlreinrichtung müssen die Durchtritte der Folienkühleinrichtung im Bereich der einzelnen Schlitze nicht unbedingt separat abgedichtet werden, was sehr vorteilhaft ist.

Es ist optional denkbar, dass auf der den Speicherzellen abgewandten Seite der ersten Wandung zwischen Folienkühlkörper und erster Wandung ein Dicht- und/oder Klebemittel aufgebracht ist. Ferner ist denkbar, dass die erste Wandung als separates Bauteil in Form einer Platte mit Schlitzstruktur ausgeführt ist. Die Schlitze der Schlitzstruktur können z. B. jeweils eine zur Kühlkörperbreite (im mit Kühlmittel gefüllten Zustand) korrespondierende Breite aufweisen. Ein einen Kühlmitteleingang und Kühlmittelausgang aufweisender Endbereich des Kühlkörpers kann beispielsweise ferner in einem der Schlitze gehaltert sein. In anderen Worten können die Kühlkörper sich durch die Schlitze erstrecken und senkrecht auf der Kühlplatte z. B. segelartig hintereinander auf der Kühlplatte angeordnet sein. Die Schlitze können so in vorteilhafter Weise der Halterung der Kühlkörper dienen.

Gemäß einer Weiterbildung einer der letztgenannten beiden Aspekte kann die erste Wandung einen ersten Befestigungsbereich aufweisen und die zweite Wandung einen am ersten Befestigungsbereich befestigten zweiten Befestigungsbereich aufweisen. Beispielsweise ist der erste Befestigungsbereich ein erster Flansch und der zweite Befestigungsbereich ein zweiter Flansch. Ferner kann die Folienkühleinrichtung einen zwischen dem ersten Befestigungsbereich und dem zweiten Befestigungsbereich angeordneten Endbereich aufweisen. Der Endbereich kann zur Abdichtung der Kühlvorrichtung zwischen den ersten Befestigungsbereich und den zweiten Befestigungsbereich geklemmt sein. Alternativ oder ergänzend kann der erste Befestigungsbereich und der zweite Befestigungsbereich zur Abdichtung der Kühlvorrichtung mit dem dazwischen angeordneten Endbereich der Folienkühleinrichtung umgebördelt sein. Alternativ oder ergänzend kann am Endbereich zur Abdichtung der Kühlvorrichtung eine, vorzugsweise in Bezug auf die Kühlplatte umlaufende, Dichtlippe befestigt sein. Damit kann der Folienkühlkörper in vorteilhafter Weise auch zur Abdichtung der Kühlplatte dienen während die Kühlplatte gleichzeitig in vorteilhafter Weise zur Festlegung oder Halterung des Folienkühlkörpers dienen kann.

Gemäß einer Weiterbildung kann die zweite Wandung der Kühlplatte Prägungen aufweisen, die ausgebildet sind, Kühlmittel innerhalb der Kühlplatte in einen Kühlmittelvorlauf und einen Kühlmittelrücklauf zu leiten. In anderen Worten können durch die Prägungen z. B. Kanäle oder Bahnen für das Kühlmittel zur Leitung des Kühlmittels abgegrenzt werden. Vorteilhaft ergibt sich eine besonders einfache und kostensparende Möglichkeit der Fluidführung innerhalb der Kühlplatte. Die Kühlplatte kann somit aus einer ersten Platte mit Schlitzstruktur (erste Wandung) und einer zweiten Platte mit Prägestruktur (zweite Wandung) zusammengesetzt sein.

Gemäß einer Weiterbildung des letztgenannten Aspekts kann die Kühlplatte so ausgeführt sein, dass der Kühlmittelvorlauf innerhalb der Kühlplatte einen an einem Randbereich der Kühlpatte angeordneten Kühlmittelkanal mit einer Mehrzahl dazu orthogonal angeordneter Seitenäste aufweist und der Kühlmittelrücklauf einen an einem zum Kühlmittelvorlauf gegenüberliegenden Randbereich angeordneten Kühlmittelkanal mit einer Mehrzahl dazu orthogonal angeordneter Seitenäste aufweist. Zudem können die Seitenäste des Kühlmittelvorlaufs und die Seitenäste des Kühlmittelrücklaufs derart ineinander verschränkt sein, dass ein Seitenast des Kühlmittelvorlaufs immer unmittelbar benachbart zu einem Seitenast des Kühlmittelrücklaufs angeordnet ist. In anderen Worten kann sich innerhalb der Kühlplatte eine alternierende Abfolge aus Seitenästen des Kühlmittelvorlaufs und Kühlmittelrücklaufs ergeben. Z. B. können Kühlmittelvorlauf und Kühlmittelrücklauf in Form zweier ineinander geschobener Buchstaben "n", weiter vorzugsweise zweier ineinander geschobener Buchstaben "E" ausgebildet sein. Dies erhöht die Leistungsfähigkeit der Kühlvorrichtung über eine verbesserte Wärmeübertragung weiter. Vorzugsweise stehen die Seitenäste des Kühlmittelvorlaufs und die Seitenäste des Kühlmittelrücklaufs der Kühlplatte über die Kühlkörper fluidisch miteinander in Verbindung. Auf diese Weise wird eine besonders lange Kühlstrecke innerhalb des Batterie-Zellenmoduls realisiert.

Gemäß einer weiteren Ausführungsform kann die Folienkühleinrichtung eine Aluminium-Folie oder Kunststofffolie umfassen und/oder durch eine Aluminium-Folie oder Kunststofffolie ausgebildet sein. Die Aluminiumfolie kann mit oder ohne Kunststoffbeschichtung ausgeführt sein. Alternativ oder ergänzend kann die Folienkühleinrichtung als durchgängige und/oder einstückige Folie ausgebildet sein. Es ist denkbar, dass es sich z. B. um eine handelsübliche Aluminium-Folie mit Kunststoffbeschichtung handelt, wie sie beispielsweise in der Verpackungsindustrie geläufig ist. Vorteilhaft ergibt sich ein besonders guter Wärmeübergang zwischen Kühlkörper und Speicherzelle und gleichzeitig eine besonders strapazier- und widerstandsfähige Hülle für die Kühlkörper.

Alternativ oder ergänzend kann die Folienkühleinrichtung Folien-Kühlkörper und/oder Pouch-Kühlkörper ausbilden. Der Begriff des Pouch-Kühlkörpers wird dabei in Analogie zur in der Batterietechnik weit verbreiteten Pouch-Batteriezelle, auch Pouch-Bag-Zelle oder Coffee-Bag-Zelle, verwendet und soll jegliche Art der flexiblen Außenumhüllung des Kühlkörpers umfassen. Die Wandstärke der Hülle kann dabei lediglich beispielhaft in einem Bereich zwischen 0,05 mm bis 0,2 mm, besonders bevorzugt bei ca. 0,1 mm liegen. Vorteilhaft ergibt sich, dass die Kühlkörper thermisch bedingte Expansions- oder Kompressionsbewegungen der Speicherzellen besonders gut kompensieren kann, sodass immer ein besonders guter Wärmeübergang bzw. Wärmeabfuhrbedingungen zwischen Speicherzelle und Kühlkörper gewährleistet ist. Der Spalt zwischen zwei Speicherzellen kann lediglich beispielhaft im Bereich von ca. 1 mm liegen.

Gemäß einer weiteren Ausführungsform kann zwischen allen Speicherzellen jeweils ein Kühlkörper zur Seitenflächenkühlung der Speicherzellen angeordnet sein. In anderen Worten können innerhalb der Energiespeichervorrichtung Kühlkörper und Speicherzellen in alternierender Abfolge aufeinander folgen. Es ist denkbar, dass es sich dabei um eine regelmäßig alternierende Abfolge von Kühlkörpern und Speicherzellen handelt. Dies garantiert eine homogene Wärmeabfuhr bzw. Temperaturverteilung innerhalb der Energiespeichervorrichtung und erhöht die Leistungsfähigkeit der Kühlung der Energiespeichervorrichtung weiter. In einer alternativen Variante ist es ferner möglich, dass es sich um eine unregelmäßige Abfolge von Kühlkörpern und Speicherzellen handelt. In anderen Worten ist es beispielsweise alternativ denkbar, dass nur in jedem zweiten, dritten oder vierten, etc. Zwischenraum zwischen benachbarten Speicherzellen jeweils ein Kühlkörper vorgesehen ist.

Ferner kann jeweils ein Kühlkörper mit einer elastischen Hülle an den äußeren Speicherzellen außenseitig zur Seitenflächenkühlung angeordnet sein. D. h. optional kann auch an den Abschluss-Seiten des Batterie-Zellenmoduls ein derartiger Kühlkörper angeordnet sein, und so das erste und das letzte Element der alternierenden Abfolge aus Kühlkörpern und Speicherzellen in der Energiespeichervorrichtung bilden. Dies verringert die Wärmeabstrahlung der Energiespeichervorrichtung gegenüber benachbarten Komponenten in vorteilhafter Weise.

In einer weiteren Ausführungsform kann zumindest einer der Kühlkörper mindestens einen Falz oder mindestens eine Prägung aufweisen, die ausgebildet ist, einen Innenraum des Kühlkörpers in fluidisch miteinander verbundene Teilräume zu unterteilen. Im ersten Teilraum befindet sich ein Kühlmitteleingang für Kühlmittel von der Kühlplatte und im letzten Teilraum der Kühlmittelausgang des Kühlkörpers, aus dem Kühlmittel zurück zur Kühlplatte geleitet wird.

Es ist denkbar, dass zumindest einer der Kühlkörper einen Falz oder Prägung oder mehrere Falzen oder Prägungen aufweist. Der Falz oder die Prägung kann beispielsweise durch Umformung, Knickung, Faltung und/oder Erhitzung aufgebracht werden. Die Prägung weist vorzugsweise eine Dicke von ca. 0,1 bis 0,2 mm auf. Der mindestens eine Falz oder die Prägung kann ausgebildet sein, um Kühlmittel bogenförmig, U-förmig oder mäanderförmig von einem Kühlmitteleingang des Kühlkörpers zu einem Kühlmittelausgang des Kühlkörpers zu leiten. Vorteilhaft ergibt sich eine gerichtete Strömung im Kühlkörper, was die Kühlwirkung insgesamt weiter erhöht.

Gemäß einer weiteren Variante dieser Ausführungsform kann zumindest einer der Kühlkörper genau eine, beispielsweise in einem mittleren Bereich angeordnete, Falz oder Prägung aufweisen, die ausgebildet ist, einen Innenraum des Kühlkörpers in zwei fluidisch miteinander verbundene Teilräume zu unterteilen, um Kühlmittel bogenförmig und/oder U-förmig von dem Kühlmitteleingang des Kühlkörpers zu dem Kühlmittellausgang des Kühlkörpers zu leiten.

In einer weiteren Ausführungsform kann zumindest einer der Kühlkörper zumindest teilweise von einem zwischen benachbarten Speicherzellen angeordneten Rahmen umgeben sein, der zur Aufnahme von Kräften zwischen benachbarten Speicherzellen ausgebildet ist, vorzugsweise zur Aufnahme von Verpresskräften zwischen benachbarten Speicherzellen. Ein derartiger Druckrahmen wird daher nachfolgend als Druckrahmen bezeichnet. Vorzugsweise ist der Druckrahmen ein Kunststoff-Druckrahmen. Es ist möglich, dass der Druckrahmen z. B. in seiner Struktur und Form an die Ausführung des Speicherzellen-Moduls und dessen Anbindung im Batteriepack angepasst ist. Es ergibt sich vorteilhaft, dass die Kräfte einer Verpressung der Batterie-Zellenmodule über die Druckrahmen und nicht die Kühlkörper abgeleitet werden, was die Lebensdauer der Energiespeichereinrichtung erhöht. Durch die Druckfestigkeit des Druckrahmens ist ferner, insbesondere im Falle prismatischer Speicherzellen, eine Verspannung der Speicherzellen möglich.

Der Druckrahmen kann an einem Rand des Kühlkörpers befestigt sein. Vorzugsweise kann der Druckrahmen an einer äußeren Randprägung oder Randfalz des Kühlkörpers durch eine Umspritzung befestigt sein. Dieser Fall der Anspritzung von Kühlkörper zu Druckrahmen findet vorzugsweise nur dann Anwendung, wenn der Druckrahmen zusammen mit den Kühlkörpern montiert wird, und nicht bei der Verpressung der Batteriezellen in der Modulherstellung. Hierbei kann ein separates Bauteil als Druckrahmen durch die Umspritzung am Kühlkörper befestigt werden oder die Umspritzung selbst kann den Druckrahmen ausbilden.

Alternativ zur Befestigung des Druckrahmens am Rand des Kühlkörpers kann der Druckrahmen lose an dem Kühlkörper anliegen und durch Verpressung der benachbarten Speicherzellen in Position gehalten sein. In anderen Worten kann der Druckrahmen bspw. keine mechanische Verbindung zum Kühlkörper aufweisen und nach unten, d. h. in Richtung zur Kühlplatte, frei stehen. Es ist denkbar, dass der Druckrahmen während der Montage der Batterie-Zellen eingelegt wird oder bereits im Anlieferungszustand Teil der Gruppierung der Speicherzellen, z. B. Teil des Batterie-Zellenmoduls, ist. Dies stellt eine besonders einfache und kostengünstige Anordnung des Druckrahmens dar. Ferner kann der bisher geläufige Montageprozess bekannter Batterie-Zellenmodule oder bekannter Cell-to-Pack-Batteriepacks aufgrund des Druckrahmens auch für das hier vorgeschlagene Batterie-Zellenmodul oder Cell-to-Pack-Batteriepacks übernommen werden.

Der Druckrahmen ist bevorzugt an die Außenkontur des Kühlkörpers angepasst. Vorzugsweise ist der Druckrahmen in Form der Buchstaben "M", also M-förmig, oder "n" ausgebildet. Diese Formgebungen sind lediglich beispielhaft zu verstehen. Der Druckrahmen kann auch andere Formen aufweisen und in seiner Formgebung von der Form der Batterie abhängig sein oder an diese angepasst sein.

Bei den Speicherzellen kann es sich um sog. Pouch-Speicherzellen oder prismatische Speicherzellen handeln. Sind die Speicherzellen beispielsweise zu einem Batterie-Zellenmodul zusammengefasst, kann das Batterie-Zellenmodul prismatische Speicherzellen oder Pouch-Speicherzellen aufweisen. Sind die Speicherzellen alternativ im Rahmen einer sog. cell-to-pack-Technologie direkt in ein Batteriepack verbaut, können die Speicherzellen auch hier als prismatische Speicherzellen oder als Pouch-Speicherzellen ausgeführt sein.

Unter den Begriff der prismatischen Speicherzellen, wie er im Sinne dieses Dokuments verwendet wird, sollen insbesondere solche Speicherzellen fallen, die ein festes prismenförmiges oder quaderförmiges Gehäuse, z. B. aus einem formstabilen Kunststoff, aufweisen. Demgegenüber sollen unter den Begriff der Pouch-Speicherzellen, wie er im Sinne dieses Dokuments verwendet wird, insbesondere solche Speicherzellen fallen, die von einer flexiblen Außenfolie umschlossen sind. Daneben wird auf die - in der Batterietechnik hinlänglich bekannten - Unterschiede im inneren Aufbau der prismatischen und Pouch-Speicherzellen verwiesen. In Bezug auf prismatische Speicherzellen und Pouch-Speicherzellen ergeben sich durch die zusätzliche erfindungsgemäße aktive Seitenkühlung eine verbesserte Wärmeabfuhr und insbesondere die Vorteile einer homogeneren Speicherzellen-Temperaturverteilung, einem konstanteren Speicherzellen-Temperaturniveau, einer längeren Speicherzellen-Lebensdauer und einer gezielteren Temperatur-Konditionierung der Speicherzelle (u. a. auch beim Ladevorgang).

In einer weiteren Ausführungsform kann die Energiespeichervorrichtung mehrere Batteriezellenstapel der stapelartig nebeneinander angeordneten Speicherzellen aufweisen. Beispielsweise können auf der Kühlplatte der Kühlvorrichtung mindestens zwei nebeneinander angeordnete Stapel von Speicherzellen angeordnet sein. Derartige Stapel, die auf einer Ebene angeordnet sind, bilden zusammen einen sog. Layer oder Lage der Energiespeichervorrichtung aus. Die Folienkühleinrichtung weist hierbei korrespondierend zur Anzahl der nebeneinander angeordneten Stapel von Speicherzellen eine korrespondierende Anzahl von seitlich benachbart zueinander angeordneten Kühlkörper-Stapeln auf. In dieser Ausführungsform bildet die einteilig ausgeführte Folienkühleinrichtung somit mehrere Kühlkörper-Stapel aus, so dass pro Layer der Energiespeichervorrichtung eine einteilig ausgeführte Folienkühleinrichtung zum Einsatz kommt. In anderen Worten können die mehreren, seitlich benachbart zueinander angeordneten Batteriezellenstapel eine Lage oder einen Layer ausbilden, wobei alle Kühlkörper der Lage oder des Layers durch eine Folienkühleinrichtung ausgebildet sind. Dies verringert den technischen Aufwand weiter.

Die Erfindung betrifft ferner ein Fahrzeug, aufweisend eine Energiespeichervorrichtung wie in diesem Dokument beschrieben. Das Fahrzeug ist vorzugsweise zumindest teilweise elektrisch angetrieben. Vorzugsweise handelt es sich bei dem Fahrzeug um ein Kraftfahrzeug, beispielsweise um einen Personenkraftwagen (PKW) oder um ein Nutzfahrzeug. In letztgenanntem Fall kann es sich bei dem Fahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und/oder einen Sattelzug handeln, der zumindest teilweise elektrisch angetrieben ist. Es ist jedoch auch denkbar, dass das Fahrzeug ein Schienenfahrzeug oder Flugzeug ist.

Ferner ist es ebenso denkbar, dass die Erfindung als stationäre Energiespeichervorrichtung oder Batteriespeicher ausgebildet ist oder dass die Energiespeichervorrichtung Teil einer stationären, also nicht-mobilen, Vorrichtung ist. Ein Beispiel hierfür wäre eine fest installierte Energiespeichervorrichtung, beispielsweise in Kombination mit einer Solar- oder Windkraftanlage.

Gemäß einem zweiten allgemeinen Gesichtspunkt der Erfindung wird ferner ein Verfahren zur Herstellung der Energiespeichervorrichtung bereitgestellt. Zur Herstellung einer Energiespeichervorrichtung gemäß der vorstehend beschriebenen Ausführungsform, bei der die Kühlplatte eine dem Batterie-Zellenmodul zugewandte erste Wandung mit Schlitzstruktur zur Halterung der Kühlkörper aufweist, zeichnet sich das Verfahren durch folgenden Schritt zur Anordnung der Kühlkörper auf der Kühlplatte aus:
Hindurchstecken der Kühlkörper durch die Schlitze der Schlitzstruktur bis die Folienkühleinrichtung an einer den Speicherzellen abgewandten Seite der ersten Wandung abschnittsweise flächig anliegt. Da die Kühlkörper als Taschen der einteilig ausgeführten Folienkühleinrichtung ausgebildet sind, können alle Kühlkörper quasi gleichzeitig in einem Montageschritt auf bzw. an der Kühlplatte angeordnet werden.

In einer Ausführungsform umfasst das Verfahren ferner das Befestigen der Folienkühleinrichtung zwischen der ersten Wandung und der zweiten Wandung. Die Folienkühleinrichtung ist hierbei optional mittels Klemmen des Endbereichs zwischen dem ersten Befestigungsbereich und dem zweiten Befestigungsbereich befestigt. Alternativ oder ergänzend ist die Folienkühleinrichtung mittels Umbördeln des ersten Befestigungsbereichs und des zweiten Befestigungsbereichs mit dem dazwischen angeordneten Endbereich der Folienkühleinrichtung befestigt. Alternativ oder ergänzend ist die Folienkühleinrichtung mittels einer am Endbereich zur Abdichtung der Kühlvorrichtung befestigten Dichtlippe befestigt.

Hierbei kann das Hindurchstecken jeweils eines Kühlkörpers durch einen Schlitz mittels Montageschwerter erfolgen, auf welches die Kühlkörper vor dem Hindurchstecken aufgestülpt werden und welche nach dem Hindurchstecken wieder herausgezogen werden. Dies birgt den Vorteil, dass ein Zusammenfallen der Kühlkörper mit elastischer Hülle bei der Herstellung der Energiespeichervorrichtung verhindert wird und eine einfache Montage ermöglicht wird.

Hierzu wird vorzugweise eine Montageeinrichtung verwendet, die - korrespondierend zur Schlitzstruktur der ersten Wandung der Kühlplatte und korrespondierend zu der Anzahl der Kühlkörper der Folienkühleinrichtung - eine entsprechende Anzahl und entsprechend beabstandete Anordnung an Montageschwerten aufweist.

Bei einer Gruppierung der Speicherzellen als Batterie-Zellenmodul mit prismatischen Speicherzellen erfolgt anschließend das Aufsetzen des Batterie-Zellenmoduls auf den mindestens einen hindurchgesteckten Kühlkörper. Es ist auch denkbar, zuerst das Batterie-Zellenmodul aufzusetzen und anschließend von unten die Kühlkörper durch Hindurchstecken durch die Schlitzstruktur in den Zwischenräumen zwischen den Speicherzellen zu positionieren.

Kommen Pouch-Zellen zum Einsatz, werden diese separat auf die Kühlplatte aufgesetzt und anschließend zu einem Zellenmodul zusammengefasst.

Bei der Ausführungsvariante als Cell-to-Pack-Batteriemodul werden die Speicherzellen separat im Rahmen des cell-to-pack, CTP-Verfahrens auf die Kühlplatte aufgesetzt, beispielsweise einzeln aufgesetzt.

Das vorgeschlagene Verfahren kann ferner optional das Auftragen einer Wärmeleitpaste (sog. "Gapfiller") auf die Kühlplatte umfassen.

Das vorgeschlagene Verfahren und seine Weiterbildungen sind sowohl auf prismatische Speicherzellen als auch auf Pouch-Speicherzellen anwendbar.

Die zuvor beschriebenen bevorzugten Ausführungsformen und Merkmale der Erfindung sind beliebig miteinander kombinierbar. Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere im Hinblick auf die Ausbildung der Kühlkörper und Kühlplatte und deren Anordnung zueinander gelten somit auch für das Verfahren.

Einzelheiten und Vorteile der Erfindung werden im Folgenden unter Bezug auf die beigefügte Zeichnung beschrieben. Es zeigen:
- Figur 1: eine Kühlvorrichtung der Energiespeichervorrichtung gemäß einer Ausführungsform der Erfindung;
- Figur 2: eine Energiespeichervorrichtung gemäß einer Ausführungsform in der Explosionsdarstellung;
- Figur 3: eine Schnittansicht (Teildarstellung) der Kühlvorrichtung gemäß einer Ausführungsform der Erfindung;
- Figur 4: eine Detailansicht der Figur 3 zur Illustration der Halterung eines Kühlkörpers einer Folienkühleinrichtung an einer Kühlplatte;
- Figur 5: eine Schnittansicht (Teildarstellung) der Kühlplatte gemäß einer Ausführungsform der Erfindung;
- Figur 6: eine untere Wandung der Kühlplatte der Kühlvorrichtung zur Illustration der Kühlmittelführung innerhalb der Kühlvorrichtung gemäß einer Ausführungsform der Erfindung;
- Figur 7: einen Kühlkörper der Kühlvorrichtung in einer Seitenansicht gemäß einer Ausführungsform der Erfindung;
- Figur 8: den Kühlkörper aus Figur 7 in einer perspektivischen Ansicht;
- Figur 9: einen Kühlkörper der Kühlvorrichtung mit Druckrahmen gemäß einer weiteren Ausführungsform der Erfindung;
- Figur 10: einen Kühlkörper der Kühlvorrichtung mit Druckrahmen gemäß einer weiteren Ausführungsform der Erfindung;
- Figur 11: eine ergänzende Ansicht der Positionierung einer Pouch-Speicherzelle zwischen zwei auf einer Kühlplatte angeordneten Kühlkörpern gemäß einer weiteren Ausführungsform;
- Figur 12: ein schematisches Ablaufdiagramm des Verfahrens zur Herstellung der Energiespeichervorrichtung; und
- Figur 13: ergänzende schematische Darstellungen der Verfahrensschritte aus Figur 12.

Gleiche oder funktional äquivalente Elemente sind in allen Figuren mit denselben Bezugszeichen bezeichnet und sind zum Teil nicht gesondert beschrieben.

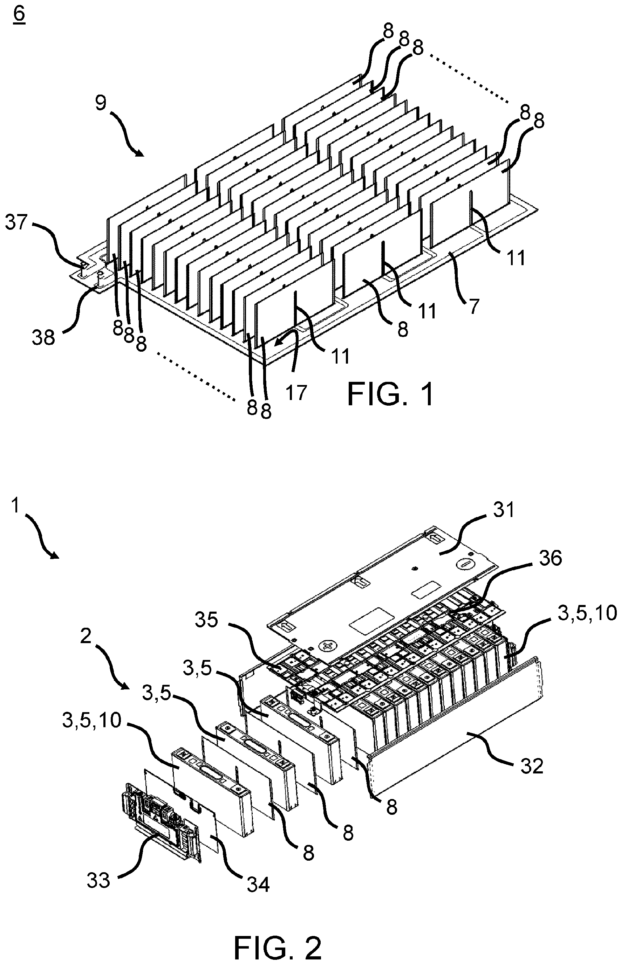

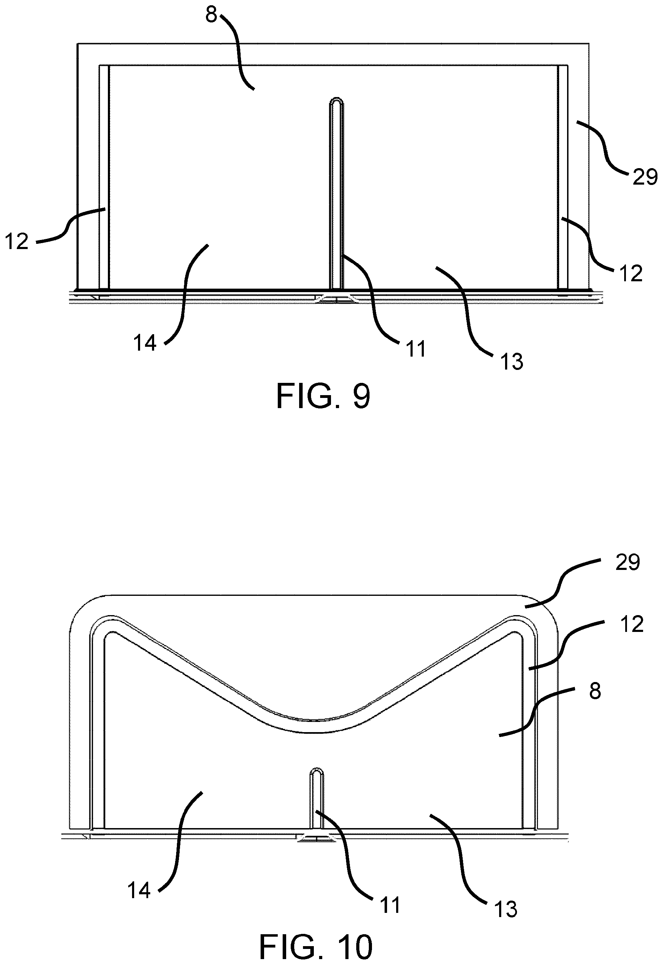

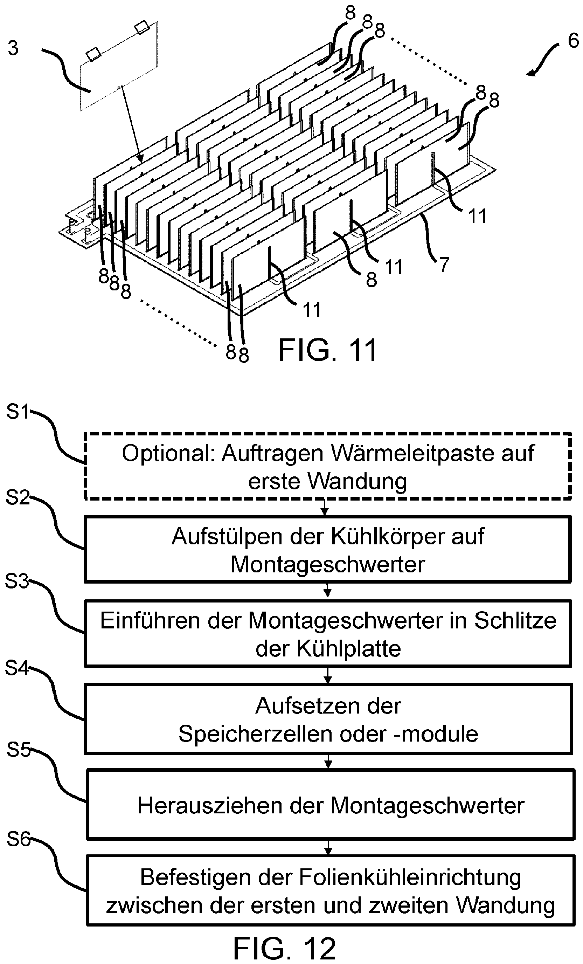

Die Figuren 1 bis 8 zeigen eine erste, die Figur 9 eine zweite, die Figur 10 eine dritte und die Figur 11 eine vierte Ausführungsform der vorgeschlagenen Energiespeichervorrichtung 1, wobei die Figuren zum Teil lediglich der besseren Veranschaulichung des jeweils charakteristischen Teilaspekts der jeweiligen Ausführungsform dienen. Auf die Darstellung von für diese charakteristischen Teilaspekte nicht wesentlicher Komponenten wurde insofern zur besseren Sichtbarkeit dieses charakteristischen Aspekts verzichtet.

Nachfolgend wird zunächst auf die Figuren 1 bis 8 Bezug genommen. Figur 2 zeigt eine Energiespeichervorrichtung 1 zur Speicherung elektrischer Energie für ein zumindest teilweise elektrisch angetriebenes Kraftfahrzeug (nicht dargestellt). Die Energiespeicherung 1 kann ausgebildet sein, elektrische Energie, vorzugsweise Traktionsenergie, temporär aufzunehmen. Die Energiespeichervorrichtung 1 verfügt in an sich bekannter Weise über eine Mehrzahl von stapelartig nebeneinander angeordneten Speicherzellen 3. Die Speicherzellen können z. B. als Lithium-Ionen-Akkumulator ausgebildet sein. Die Speicherzellen 3 sind zu einem Batterie-Zellenmodul 2 zusammengefasst und parallel und/oder seriell miteinander verschaltetet. In Figur 1 sind die Speicherzellen 3 als prismatische Zellen 5 dargestellt. Alternativ können die Speicherzellen 3 auch als Pouch-Speicherzellen 4 (vgl. Figur 11) ausgeführt sein. Vorstehend wurde bereits festgestellt, dass alternativ zur Verwendung von Batterie-Zellenmodulen auch sog. cell-to-pack-Verfahren zu Anwendung kommen können, bei der die Speicherzellen direkt in ein Batteriepack eingebaut und somit die Kosten für die Modul-Komponenten als Zwischenschritt übersprungen werden können.

Das Batterie-Zellenmodul 2 umfasst neben dem Speicherzellen-Verbund an sich auch zusätzlich weitere an sich bekannte und zur Speicherung elektrischer Energie notwendige Komponenten, wie beispielsweise Grund- oder Endplatten 33, Platinen bzw. Busbars 35 und Leiterplatten 36, Deck- oder Seitenabdeckungen 31, 32, Schutzplatten 34 etc. fallen, die teilweise exemplarisch in Figur 2 dargestellt sind.

In den Speicherzellen 3 entsteht im Betrieb Verlustwärme. Bei niedriger Umgebungstemperatur kann auch eine Wärmeaufnahme erfolgen, die Energiespeichervorrichtung also geheizt werden. Um einen ordnungsgemäßen Betrieb sicherzustellen und eine Beschädigung der Speicherzellen 3 zu vermeiden sowie um eine möglichst lange Lebensdauer zu erreichen, müssen dieselben in einem definierten Temperaturbereich betrieben werden.

Die Energiespeichervorrichtung 1 weist hierzu eine Kühlvorrichtung 6 zur Temperierung, insbesondere zur Kühlung, der Speicherzellen 3 auf, die in Figur 1 dargestellt ist. Die Kühlvorrichtung 6 weist eine mit einem Kühlmittel durchströmbare, an einer Seitenfläche, hier an einer Bodenfläche, des Batterie-Zellenmoduls 2 angeordnete, zur Bodenkühlung des Batterie-Zellenmoduls 2 ausgebildete Kühlplatte 7 auf. Dazu kann die Kühlplatte 7 z. B. einen Kühlmittelanschluss 37 aufweisen, über den Kühlmittel in die Kühlplatte 7 fließen kann und einen Kühlmittelabfluss 38 aufweisen über den Kühlmittel aus der Kühlplatte 7 herausfließen kann. Die Kühlplatte 7 kann fluidisch an einen Kühlkreislauf des Kraftfahrzeugs angeschlossen sein, dessen weitere Komponenten hier nicht dargestellt sind.

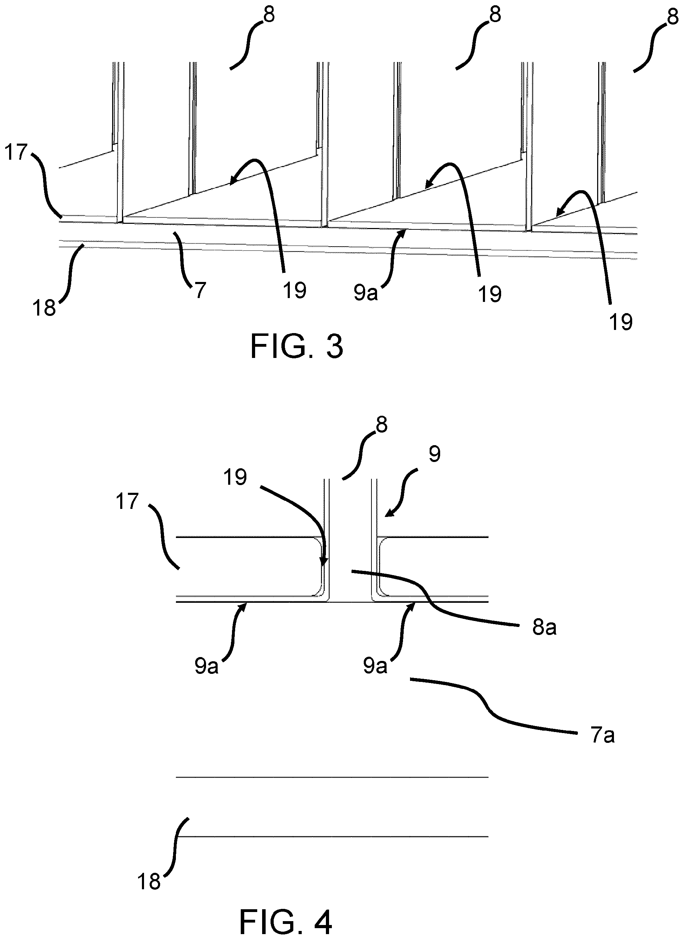

Ferner weist die Kühlvorrichtung im in Figur 1 gezeigten Ausführungsbeispiel eine Folienkühleinrichtung 9 auf, die mehrere Kühlkörper 8 ausbildet (hier lediglich beispielhaft 42 Stück). Die einteilig ausgeführte, mit dem Kühlmittel durchströmbare Folienkühleinrichtung 9 bildet die Kühlkörper 8 als stapelartig angeordnete, zueinander beabstandete Taschen aus (wie später in Bezug auf die Figur 3 näher erläutert wird). Die Kühlkörper 8 haben eine elastische äußere Hülle. Derartige Kühlkörper 8 können daher auch als Folien-Kühlkörper oder Pouch-Kühlkörper bezeichnet werden. Nachfolgend wird daher auch der Begriff Pouch-Kühlkörper verwendet. Die Folienkühleinrichtung 9 kann z. B. durch eine Aluminium-Folie, die eine Kunststoffbeschichtung aufweist, gebildet sein.

In Figur 1 und Figur 2 sind aufgrund der Explosionsdarstellung zur Illustration des Aufbaus nur die als Kühlkörper 8 ausgebildeten Bereiche bzw. Taschen der Folienkühleinrichtung 9 gezeigt. Die Kühlkörper 8 sind jedoch durch dasselbe Folienelement gebildet und miteinander verbunden und zwar auf der Rückseite der oberen Wandung der Kühlplatte 7, was in Figur 1 und Figur 2 nicht sichtbar ist, aber nachfolgend noch detaillierter beschrieben wird.

Die Pouch-Kühlkörper 8 sind korrespondierend zur Anordnung der Speicherzellen in Reihen neben- und hintereinander auf der Kühlplatte angeordnet, so dass im Zwischenraum zwischen zwei benachbarten Speicherzellen jeweils ein Pouch-Kühlkörper 8 angeordnet ist. Zur besseren Übersichtlichkeit sind in den Figuren 1, 2, 11 und 13 nicht ausnahmslos alle Kühlkörper 8 mit Bezugszeichen versehen.

In Figur 2 wird die Positionierung der Kühlkörper 8 zwischen den Speicherzellen 3, 5 der Energiespeichervorrichtung 1 dieser ersten Ausführungsform deutlich. Gezeigt ist ein Teil der Energiespeichervorrichtung 1 in der teilweisen Explosionsdarstellung. Insbesondere wurde zugunsten der Übersicht auf die vollständige Darstellung der Folieneinrichtung 9 verzichtet. Der Teil der Folienkühleinrichtung bzw. des Folienelements, der benachbarte Kühlkörper 8 miteinander integral verbindet, ist nicht dargestellt, wie vorstehend zur Figur 1 bereits ausgeführt wurde.

In dieser Ausführungsform ist jeweils ein Kühlkörper 8 zwischen allen benachbarten Speicherzellen 3 zur Seitenflächenkühlung der Speicherzellen 3 angeordnet. Im gezeigten Ausführungsbeispiel folgen in der Energiespeichervorrichtung 1 also Speicherzellen 3 und Kühlkörper 8 in alternierender Abfolge hintereinander. Alternativ oder ergänzend ist denkbar, dass jeweils ein Pouch-Kühlkörper 8 an den Außenflächen der äußeren Speicherzellen 10 zur Seitenflächenkühlung angeordnet ist (hier nicht dargestellt).

Die Kühlkörper 8 liegen an den Seitenflächen der Speicherzellen 3, 5 an. Durch die, insbesondere im Vergleich zur ausschließlichen Bodenkühlung, relativ große Anlagefläche geht eine vergleichsweise große Wärmemenge der Speicherzellen 3, 5 an die Kühlkörper 8 über. Den Speicherzellen 3, 5 wird insofern eine relativ große Wärmemenge entzogen.

Die Kühlkörper 8 stehen mit der Kühlplatte 7 fluidisch in Verbindung und sind mit dem Kühlmittel durchströmbar. Die durch die Kühlkörper 8 aufgenommene Wärme geht auf das Kühlmittel über und wird abtransportiert.

Dazu umfasst die Kühlplatte 7 eine dem Batterie-Zellenmodul 2 zugewandte erste Wandung 17 (siehe z. B. Figuren 1 und 3) und eine dem Batterie-Zellenmodul 2 abgewandte halbschalenförmige zweite Wandung 18 (siehe z. B. Figur 3).

Figur 3 zeigt eine Schnittansicht (Teildarstellung) durch die Kühlvorrichtung 6. Die Kühlkörper 8 werden durch die durchgängige, einteilige Folienkühleinrichtung 9 ausgebildet. Die Folienkühleinrichtung 9 bildet die Kühlkörper 8 als stapelartig angeordnete, zueinander beabstandete Taschen aus. In anderen Worten sind die Kühlkörper 8 nicht als separate, voneinander getrennte Baueinheiten ausgebildet, sondern werden durch die einteilig bzw. durchgängig ausgeführte Folienkühleinrichtung 9 ausgebildet.

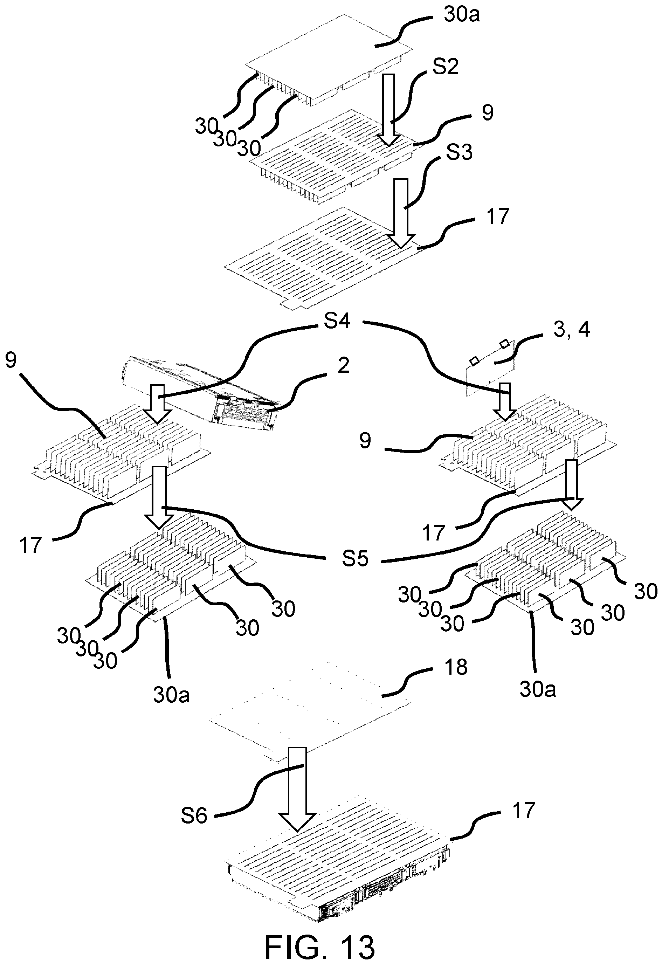

Die erste Wandung 17 weist die in Figur 13 oben dargestellte Schlitzstruktur 19 auf. Die Folienkühleinrichtung 9 bildet sowohl auf der oberen Seite der ersten Wandung 17 der Kühlplatte 7 die stapelartig angeordnete, zueinander beabstandete Taschen aus, die jeweils die Kühlkörper 8 ausbilden, als auch den die einzelnen Kühlkörper verbindenden Folienbereich 9a, der sich auf der unteren Seite der Wandung 17 entlang erstreckt und dort flächig anliegt.

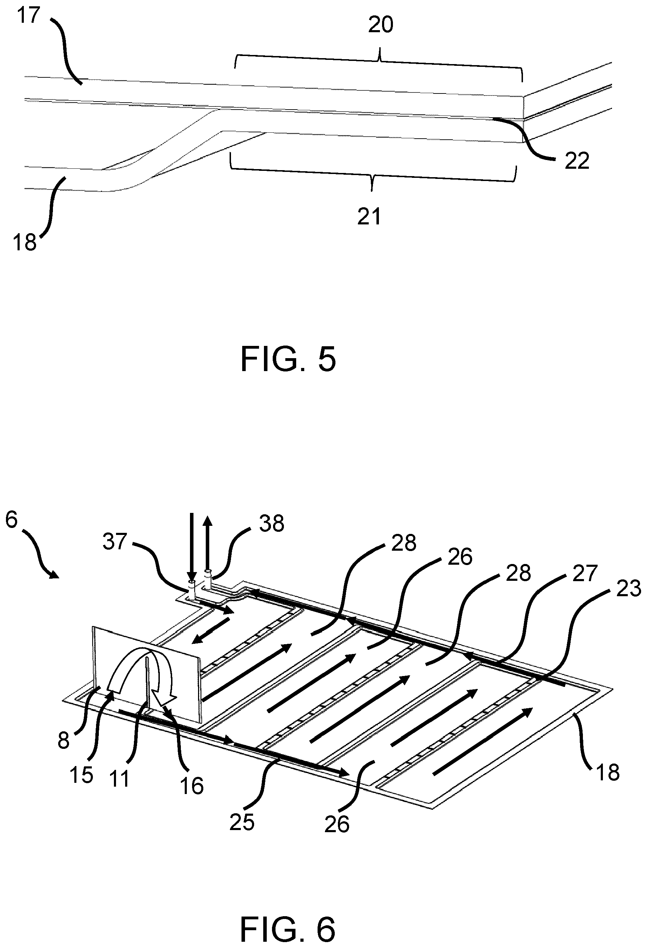

Figur 4 zeigt eine Detailansicht der Figur 3 zur Illustration der Halterung eines Kühlkörpers 8 der Folienkühleinrichtung 9 an der Kühlplatte 7. Die Schlitze der Schlitzstruktur 19 weisen jeweils eine zur Kühlkörperbreite korrespondierende Breite auf (in Tiefenrichtung der Zeichenebene). Der Kühlkörper 8 erstreckt sich durch jeweils einen Schlitz der Schlitzstruktur 17 auf eine den Speicherzellen 3, 4, 5 zugewandte Seite der ersten Wandung 17. Zwischen der ersten Wandung 17 und der zweiten Wandung 18 der Kühlplatte 7 strömt Kühlmittel über die Kühlmittelebene 7a und tritt über den Kühlmitteleingang 15 (vgl. Figur 6) am Endbereichs des Pouch-Kühlkörpers 8 in den nach unten offenen Kühlmittelkanal 8a des Pouch-Kühlkörpers 8 ein. Auch hier ist erkennbar, dass sich der Folienbereich 9a der Folieneinrichtung 9 auf der unteren Seite der ersten Wandung 17 flächig anliegt und sich nach links und rechts von einem Schlitz der Schlitzstruktur 19 erstreckt.

Figur 5 zeigt eine Schnittansicht (Teildarstellung) der Kühlplatte 7. Die Kühlplatte 7 ist aus der ersten Wandung 17 und der zweiten Wandung 18 zusammengesetzt. Die erste Wandung 17 weist randseitig einen ersten Befestigungsbereich 20 auf und die zweite Wandung 18 weist randseitig einen am ersten Befestigungsbereich 20 befestigten zweiten Befestigungsbereich 21 auf. Die Folienkühleinrichtung 9, insbesondere der in den Figuren 3 und 4 gezeigte Folienbereich 9a, weist einen zwischen dem ersten Befestigungsbereich 20 und dem zweiten Befestigungsbereich 21 angeordneten randseitigen Endbereich 22 auf. Zur Abdichtung der Kühlvorrichtung 6 ist der Endbereich 22 im gezeigten Ausführungsbeispiel zwischen den ersten Befestigungsbereich 20 und den zweiten Befestigungsbereich 21 geklemmt. Dadurch ist die Kühlplatte 7 einerseits fluiddicht abgedichtet und die Folienkühleinrichtung 9 wird andererseits gehaltert. In weiteren, hier nicht dargestellten Ausführungsformen, ist denkbar, dass der erste Befestigungsbereich 20 und der zweiten Befestigungsbereich 21 mit dem dazwischen angeordneten Endbereich 22 der Folienkühleinrichtung 9 umgebördelt ist und/oder mittels einer am Endbereich 22 zur Abdichtung der Kühlvorrichtung befestigten Dichtlippe befestigt ist.

In Figur 6 ist ersichtlich, dass die zweite Wandung 18 Prägungen 23 aufweist, die ausgebildet sind, Kühlmittel innerhalb der Kühlplatte 7 in einen Kühlmittelvorlauf und einen Kühlmittelrücklauf zu leiten. In Figur 3 ist zugunsten der Übersichtlichkeit nur ein einziger Kühlkörper 8 der Folienkühleinrichtung 9 dargestellt. Die restlichen Folienkörper und der diese verbindende Folienbereich 9a, sowie die erste Wandung 17 der Kühlplatte 7 sind hier aus Gründen der besseren Übersichtlichkeit nicht dargestellt, um die Fluidführung des Kühlmittels besser hervorheben zu können.

Figur 6 illustriert die Kühlmittelführung innerhalb der Kühlvorrichtung 6. Der Kühlmittelvorlauf weist einen an einem Randbereich der Kühlplatte 7 angeordneten Kühlmittelkanal 25 mit einer Mehrzahl dazu orthogonal angeordneter Seitenäste 26 auf. Der Kühlmittelrücklauf weist einen an einem zum Kühlmittelvorlauf gegenüberliegenden Randbereich angeordneten Kühlmittelkanal 27 mit einer Mehrzahl dazu orthogonal angeordneter Seitenäste 28 auf. Die Seitenäste 26 des Kühlmittelvorlaufs und die Seitenäste 28 des Kühlmittelrücklaufs sind derart ineinander verschränkt, dass ein Seitenast 26 des Kühlmittelvorlaufs immer unmittelbar benachbart zu einem Seitenast 28 des Kühlmittelrücklaufs angeordnet ist. In anderen Worten ergibt sich in dieser Ausführungsform eine alternierende Abfolge aus Seitenästen 26 des Kühlmittelvorlaufs und Seitenästen 28 des Kühlmittelrücklaufs. In anderen Worten weist der Kühlmittelvorlauf und der Kühlmittelrücklauf in der Draufsicht die Form zweier ineinander geschobener Buchstaben "E" auf, wobei diese Kühlmittelführung lediglich beispielhaft ist.

Die Seitenäste 26 des Kühlmittelvorlaufs und die Seitenäste 28 des Kühlmittelrücklaufs der Kühlplatte 7 stehen über die Kühlkörper 8 fluidisch miteinander in Verbindung. Dazu ist ein Kühlmitteleingang 15 des Kühlkörpers 8 fluidisch mit einem Seitenast 26 des Kühlmittelvorlaufs verbunden, während ein Kühlmittellausgang 16 des Kühlkörpers 8 fluidisch mit einem Seitenast 28 des Kühlmittelrücklaufs der Kühlplatte 7 in Verbindung steht.

In anderen Worten tritt Kühlmittel über den Kühlmittelanschluss 37 in die Kühlplatte 7 ein und fließt in den Kühlmittelvorlauf und die orthogonal angeordneten Seitenäste 26. Das Kühlmittel tritt anschließend über den Kühlmitteleingang des Kühlkörpers 15 in den Kühlkörper 8 ein, nimmt die Wärme der Speicherzellen 8 auf und fließt erwärmt über den Kühlmittelausgang 16 des Kühlkörpers 8 in den Kühlmittelrücklauf der Kühlplatte 7. Der Kühlmittelrücklauf führt das erwärmte Kühlmittel über den Kühlmittelabfluss 38 einem Kühlkreislauf (nicht dargestellt) des Kraftfahrzeugs zu. Die Speicherzellen 3 werden insofern aktiv temperiert bzw. im Kühlmodus gekühlt.

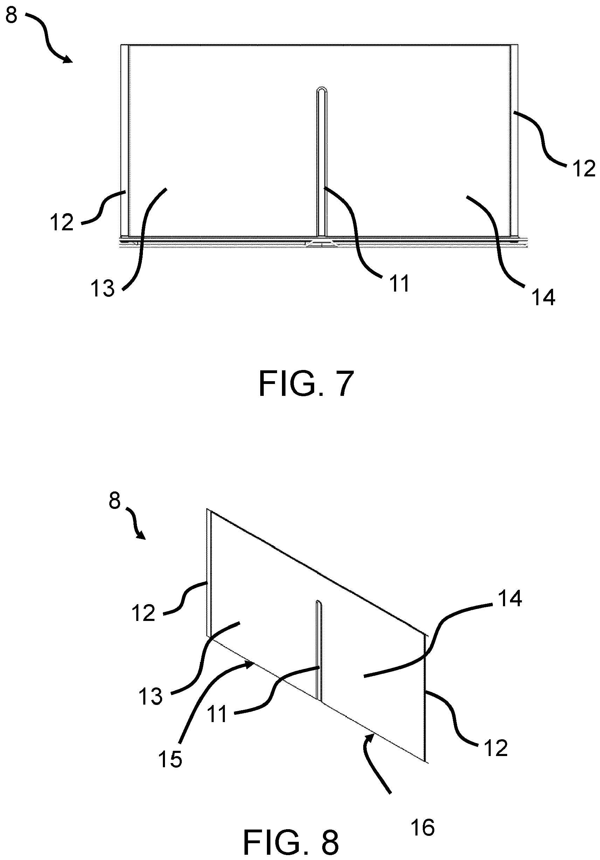

Figur 7 zeigt einen einzelnen Kühlkörper 8 der Energiespeichervorrichtung gemäß der ersten Ausführungsform aus Figur 1 in einer Seitenansicht. Figur 8 dient der ergänzenden Ansicht in perspektivischer Darstellung des Kühlkörpers 8. Auch in den Figuren 7 und 8 ist zugunsten der Übersichtlichkeit nur ein Kühlkörper 8 dargestellt. Die Folienbereiche 9a und die anderen Kühlkörper 8 der Folienkühleinrichtung 9 sind hier nicht dargestellt.

Der Pouch-Kühlkörper 8 ist, wie vorstehend erwähnt, mit einer elastischen Hülle ausgebildet. Die Wandstärke der elastischen Hülle liegt im gezeigten Ausführungsbeispiel bei ca. 0,1 mm. Der Pouch-Kühlkörper kann sich aus diesem Grund der Seitenwand einer (in Figur 7 nicht dargestellten) Speicherzelle 3, 4 ,5 besonders gut anlegen - auch für den Fall, dass die Speicherzelle 3, 4 ,5 sich thermisch bedingt ausdehnt oder zusammenzieht.

Der Kühlkörper 8 weist in der gezeigten Ausführungsform in dem mittleren Bereich seiner Seitenfläche eine Falz 11 auf. In weiteren, hier nicht dargestellten Ausführungsformen kann der Kühlkörper 8 auch mehrere Falzen 11 aufweisen.

Die Falz 11 unterteilt den Innenraum des Kühlkörpers 8 in fluidisch miteinander verbundene Teilräume 13, 14. In anderen Worten erstreckt sich die Falz 11 nicht über die gesamte Höhe des Kühlkörpers 8, sodass Kühlmittel oberhalb der Falz 11 vom ersten Teilraum 13 in den zweiten Teilraum 14 treten kann.

Die Falz 11 ist ausgebildet, Kühlmittel U-förmig vom Kühlmitteleingang 15 des Kühlkörpers 8 zum Kühlmittellausgang 16 des Kühlkörpers 8 zu leiten (siehe auch Figur 6). In anderen, hier nicht dargestellten Ausführungsformen können mehrere Falze vorgesehen sein, um Kühlmittel mäanderförmig vom Kühlmitteleingang 15 des Kühlkörpers 8 zum Kühlmittellausgang 16 des Kühlkörpers 8 zu leiten.

Der Pouch-Kühlkörper 8 weist ferner einen Randfalz 12 auf, der das Innenvolumen des Kühlkörpers 8 abdichtet. Falz 11 und Randfalz 12 sind vorliegend durch Faltung unter Erhitzung aufgebracht worden. In weiteren Ausführungsformen können der Falz 11 und der Randfalz 12 aber auch bspw. durch Umformung, Knickung, Faltung und/oder Erhitzung aufgebracht werden.

Figur 9 zeigt einen Kühlkörper 8 der Energiespeichervorrichtung 1 gemäß einer zweiten Ausführungsform. Auch in der Figur 9 ist zugunsten der Übersichtlichkeit nur ein Kühlkörper 8 der Folienkühleinrichtung 9 dargestellt. Der Folienbereich 9a und die anderen Kühlkörper der Folienkühleinrichtung 9 sind nicht dargestellt. In dieser Ausführungsform ist der Kühlkörper 8 teilweise von einem zwischen benachbarten Speicherzellen 3, 4, 5 angeordneten Druckrahmen 29 umgeben. Der Druckrahmen 29 ist vorliegend als Kunststoff-Druckrahmen 29 ausgeführt.

Wird das Batterie-Zellenmodul 2 in dieser Ausführungsform zur Erhöhung der Steifigkeit in der Herstellung verpresst, werden die Verpresskräfte nicht durch die zwischen den Speicherzellen 3, 4, 5 angeordneten Kühlkörper 8, sondern durch den Kunststoff-Druckrahmen 29 aufgenommen. Die Kühlkörper 8 werden insofern vor Beschädigung geschützt und deren Durchflussquerschnitt offen gehalten.

Der Kunststoff-Druckrahmen 29 ist vorliegend an der Randfalz 12 des Kühlkörpers 8 durch eine Umspritzung befestigt.

Figur 10 zeigt einen Kühlkörper 8 der Folienkühleinrichtung gemäß einer dritten Ausführungsform.

Der Unterschied zur zweiten Ausführungsform ist im Wesentlichen darin zu sehen, dass der Druckrahmen 29 lose an bzw. auf dem Kühlkörper 8 anliegt und durch Verpressung der benachbarten Speicherzellen 3 in Position gehalten ist.

Ferner weist der Druckrahmen 29 vorliegend die Form des Buchstabens "M" auf. Diese Form ist lediglich beispielhaft. Die Aufnahme des Druckes durch Druckrahmen kann u. a. abhängig vom internen Aufbau der Speicherzellen sein. Lediglich beispielhaft kann die Ausgestaltung des Druckrahmens, insbesondere dessen Formgebung, davon abhängen, wo die Stellen der Druckübergabe nach außen angeordnet sind. Ferner kann die Ausgestaltung des Druckrahmens von der Steifigkeit des Kunststoffgehäuses der prismatischen Batteriezelle abhängen.

Der Druckrahmen 29 weist keine mechanische Verbindung zum Randfalz 12 des Kühlkörpers 8 auf und wird lediglich durch die Verpressung der Speicherzellen (nicht dargestellt) in Position gehalten.

Die beschriebenen Ausführungsformen sind sowohl für Pouch-Speicherzellen 4 oder als prismatische Speicherzellen 5 anwendbar.

Figur 11 zeigt eine ergänzende Ansicht der Positionierung einer Pouch-Speicherzelle 3 zwischen zwei auf einer Kühlplatte angeordneten Kühlkörpern 8 gemäß einer vierten Ausführungsform. In Figur 11 sind nur die Kühlkörper 8 der Folienkühleinrichtung 9 sichtbar, da der die Kühlkörper verbindende Folienbereich 9a unterhalb der oberen Wandung der Kühlplatte 7 verläuft und daher in Figur 11 nicht sichtbar ist. Anstatt einer Pouch-Speicherzelle kann diese Positionierung auch analog mit einer anderen Speicherzelle, insbesondere einer prismatischen Speicherzelle erfolgen, die im Rahmen eines Cell-to-Pack, CTP-Batteriedesigns verbaut wird.

In dieser Ausführungsform übernehmen die Kühlkörper 8 eine Doppelfunktion.

Erstens stellen sie die bereits beschriebene besonders vorteilhafte Kühlung der Speicherzellen bereit. Zweitens übernehmen sie in dieser Ausführungsform die Funktion von Kompressionsschichten (sog. "compression/swelling-pads"). Die Kühlkörper 8 können aufgrund ihrer elastischen Hülle thermisch bedingte Expansions- und Kompressionsbewegungen der Pouch-Speicherzelle 3,4 besonders effektiv ausgleichen und die Kompressionsschichten insofern ersetzen. Diese Ausführungsform ist ebenso auf Energiespeichervorrichtungen mit prismatischen Zellen anwendbar, die ebenfalls ein Schwell-Verhalten aufweisen, das im Zwischenraum kompensiert werden muss, auch wenn das Schwellverhalten Bedingt durch Steifigkeit des Gehäuses prismatischer Speicherzellen das Schwellverhalten typischerweise geringer ausfallen kann als bei Pouch-Speicherzellen.

Figur 12 zeigt ein schematisches Ablaufdiagramm des Verfahrens zur Herstellung einer Energiespeichervorrichtung 1 gemäß der vierten bereits beschriebenen Ausführungsform. Zur ergänzenden Verdeutlichung sind die Schritte teilweise in Figur 13 dargestellt.

Dem vorgeschlagenen Verfahren liegt u. a. der Gedanke zugrunde, ein Zusammenfallen der Kühlkörper 8 mit elastischer Hülle bei der Herstellung der Energiespeichervorrichtung 1 durch den Einsatz von Montageschwertern 30 zu verhindern.

Der erste Schritt S1 des Verfahrens umfasst zunächst das optionale Auftragen eine Wärmeleitpaste (sog. "Gapfiller") auf die die erste Wandung 17 der Kühlplatte 7 (nicht dargestellt). Die Wärmeleitpaste kann z. B. dazu dienen, luftgefüllte Spalte, die typischerweise eine schlechte Wärmeleitfähigkeit bzw. eine isolatorische Wirkung aufweisen, zwischen Kühlplatte 7 und Speicherzellen 3, 4, 5 zu schließen. Die Wärmeleitpaste kann mit einer entsprechend hohen Wärmeleitfähigkeit aufweisen, sodass die Wärme der Speicherzellen 3, 4, 5 in die Kühlplatte 7 geleitet werden kann.

Bei Schritt S2 werden die Kühlkörper 8 auf Montageschwerter 30 eines Montagewerkzeuges 30a aufgestülpt. Da die in Figur 13 gezeigten Kühlkörper 8 durch ein und dasselbe Folienelement als Taschen der Folienkühleinrichtung ausgeführt sind, können die Kühlkörper 8 nur als Gruppe, d. h. gemeinsam montiert werden. Entsprechend kommt ein Montagewerkzeug 30a zum Einsatz, dass im vorliegenden Beispiel drei nebeneinander angeordnete Stapel von Montageschwerten 30 aufweist. Die Anzahl der Montageschwerten 30 entspricht der Anzahl der Kühlkörper 8 der Folienkühleinrichtung. Die Montageschwerte 30 sind korrespondierend zu Schlitzstruktur 19 der ersten Wandung der Kühlplatte angeordnet und beabstandet.

In Figur 13 sind zugunsten der Übersichtlichkeit nicht alle Montageschwerter 30 mit Bezugszeichen versehen. Das Innenvolumen des Kühlkörpers 8 kann durch ein Montageschwert 30 zumindest annähernd vollständig ausgefüllt bzw. aufgespannt werden. Ein Zusammenfallen der flexiblen Hülle der Kühlkörper 8 wird insofern verhindert.

Der dritte Schritt S3 umfasst das Einführen der auf die Montageschwerter 30 aufgestülpten Kühlkörper 8 von unten in die Schlitze der Schlitzstruktur 19 der oberen Wandung 17 der Kühlplatte 7. In Figur 13 ist zur besseren Sichtbarkeit ein Einführen von oben in die Schlitzstruktur dargestellt. Die Kühlkörper 8 werden dabei durch die Schlitze hindurchgesteckt bis die Folienkühleinrichtung 9 an einer den Speicherzellen 3, 4, 5 abgewandten Seite der ersten Wandung 17 abschnittsweise flächig anliegt. Es wird betont, dass die Kühlkörper 8 nicht einzeln, sondern alle zusammen mit dem Montagewerkzeug 30a in die Schlitzstruktur 19 eingeführt werden.

Im vierten Schritt S4 werden entweder Speicherzellen 3, 4, 5 oder ein Batterie-Zellenmodul 2 von oben auf die obere Wandung 17 aufgesetzt.

Innerhalb dieses Schritts werden insofern die auf der oberen Wandung 17 sitzenden Kühlkörper 8 zwischen den, optional als Batterie-Zellenmodul 2 angeordneten, Speicherzellen 3, 4 ,5 positioniert.

Dieses Aufsetzen der Speicherzellen auf die Kühlplatte erfolgt bei einer Ausführungsvariante der Energiespeichervorrichtung 1, bei der die Speicherzellen in Form von vorgefertigten Batterie-Zellenmodulen 2 aus prismatischen Speicherzellen bereitgestellt werden, derart, dass das ganze Batterie-Zellenmodul 2 auf die Kühlplatte aufgesetzt wird. Dies ist in Figur 13 durch die linke Variante des Schritts S4 illustriert.

Bei einem Batterie-Zellenmodul, das aus Pouch-Zellen gebildet ist, erfolgt dagegen vorzugsweise ein Aufsetzen von separaten Pouch-Zellen auf die Kühlplatte, so dass die Pouch-Zellen erst anschließend zu einem Zellenmodul zusammengefasst werden. Dies ist in Figur 13 durch die rechte Variante des Schritts S4 illustriert.

Wird die Energiespeichervorrichtung dagegen durch ein sog. cell-to-pack-Verfahren hergestellt, wobei die Speicherzellen direkt in ein Batteriepack eingebaut werden und somit die Kosten für die Modul-Komponenten als Zwischenschritt übersprungen werden, dann erfolgt das Aufsetzen der Speicherzellen auf die Kühlplatte auch durch Aufsetzen separater Speicherzellen, unabhängig davon, ob diese als prismatische Speicherzellen oder Pouch-Speicherzellen ausgebildet sind. Dies ist ebenfalls in Figur 13 durch die rechte Variante des Schritts S4 illustriert.

In Schritt S5 wird das Montagewerkzeug 30a mit allen Montageschwerten 30 nach unten herausgezogen. Anschließend erfolgt das Fügen der Strömungsleitebene. Die Folienkühleinrichtung 9 erstreckt sich im gezeigten Ausführungsbeispiel bis zu einem Randbereich der Kühlplatte 7. Wird die zweite Wandung 18 der Kühlplatte 7 in Schritt S6 von unten auf die erste Wandung 17 aufgesetzt, wird ein Endbereich 22 der Folienkühleinrichtung 9 zwischen einem ersten Befestigungsbereich 20 der ersten Wandung 17 und einem zweiten Befestigungsbereich 21 der zweiten Wandung 18 eingeklemmt. Dadurch wird die Kühlplatte 7 einerseits fluiddicht abgedichtet und die Folienkühleinrichtung 9 andererseits an der Kühlplatte 7 befestigt.

Obwohl die Erfindung unter Bezugnahme auf bestimmte Ausführungsbeispiele beschrieben worden ist, ist es für den Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Energiespeichervorrichtung
- 2: Batterie-Zellenmodul
- 3: Speicherzelle
- 4: Pouch-Speicherzelle
- 5: prismatische Speicherzelle
- 6: Kühlvorrichtung
- 7: Kühlplatte
- 7a: Kühlmittelebene
- 8: Kühlkörper
- 8a: Kühlmittelkanal
- 9: Folienkühleinrichtung
- 9a: Folienbereich
- 10: Äußere Speicherzelle
- 11: Falz
- 12: Randfalz
- 13: Erster Teilraum
- 14: Zweiter Teilraum
- 15: Kühlmitteleingang
- 16: Kühlmittelausgang
- 17: Erste Wandung
- 18: Zweite Wandung
- 19: Schlitzstruktur
- 20: Erster Befestigungsbereich
- 21: zweiter Befestigungsbereich
- 22: Endbereich
- 23: Prägung
- 25: Kühlmittelkanal des Kühlmittelvorlaufs
- 26: Seitenast des Kühlmittelvorlaufs
- 27: Kühlmittelkanal des Kühlmittelrücklaufs
- 28: Seitenast des Kühlmittelrücklaufs
- 29: Druckrahmen
- 30: Montageschwerter
- 30a: Montagewerkzeug
- 31: Deckabdeckung
- 32: Seitenabdeckung
- 33: Endplatte
- 34: Schutzplatte
- 35: Busbar
- 36: Leiterplatte
- 37: Kühlmittelanschluss
- 38: Kühlmittelabfluss

## Patentansprüche

1. Energiespeichervorrichtung (1) zur Speicherung elektrischer Energie, vorzugsweise für ein zumindest teilweise elektrisch angetriebenes Fahrzeug, aufweisend eine Mehrzahl von stapelartig nebeneinander angeordneten Speicherzellen (3, 4, 5) und eine Kühlvorrichtung (6) zur Kühlung der Speicherzellen (3, 4, 5), wobei die Kühlvorrichtung (6) aufweist:
- eine mit einem Kühlmittel durchströmbare Kühlplatte (7), die seitlich, vorzugsweise bodenseitig, in Bezug auf die Speicherzellen (3, 4, 5) angeordnet ist,
- eine mit dem Kühlmittel durchströmbare, einteilig ausgeführte Folienkühleinrichtung (9) zur Seitenflächenkühlung der Speicherzellen (3, 4, 5), die mehrere Kühlkörper (8) ausbildet, wobei zwischen zwei benachbarten Speicherzellen (3, 4, 5) jeweils einer der mehreren Kühlkörper (8) angeordnet ist, wobei die Kühlkörper (8) jeweils mit der Kühlplatte (7) fluidisch in Verbindung stehen und als Kühlkörper (8) mit einer elastischen Hülle ausgebildet sind.

2. Energiespeichervorrichtung (1) nach Anspruch 1, **dadurch gekennzeichnet, dass** die Kühlkörper (8) als stapelartig angeordnete, zueinander beabstandete Taschen der Folienkühleinrichtung (9) ausgebildet sind.

3. Energiespeichervorrichtung (1) nach einem der vorhergehenden Ansprüche, **dadurch gekennzeichnet, dass** die Kühlplatte (7) eine den Speicherzellen (3, 4, 5) zugewandte ersten Wandung (17) und eine den Speicherzellen (3, 4, 5) abgewandte, vorzugsweise halbschalenförmige, zweite Wandung (18) aufweist.

4. Energiespeichervorrichtung (1) nach Anspruch 3, **dadurch gekennzeichnet, dass** die Folienkühleinrichtung (9) an einer den Speicherzellen (3, 4, 5) abgewandten Seite der ersten Wandung (17) abschnittsweise flächig anliegt und die erste Wandung (17) eine Schlitzstruktur (19) aufweist, wobei sich jeweils ein Kühlkörper (8) durch einen Schlitz der Schlitzstruktur (17) auf eine den Speicherzellen (3, 4, 5) zugewandte Seite der ersten Wandung (17) erstreckt.

5. Energiespeichervorrichtung (1) nach Anspruch 3 oder 4, **dadurch gekennzeichnet, dass** die erste Wandung (17) einen ersten Befestigungsbereich (20) aufweist und die zweite Wandung (18) einen am ersten Befestigungsbereich (20) befestigten zweiten Befestigungsbereich (21) aufweist und die Folienkühleinrichtung (9) einen zwischen dem ersten Befestigungsbereich (20) und dem zweiten Befestigungsbereich (21) angeordneten Endbereich (22) aufweist, wobei
a) der Endbereich (22) zur Abdichtung der Kühlvorrichtung (6) zwischen den ersten Befestigungsbereich (20) und den zweiten Befestigungsbereich (21) geklemmt ist, und/oder
b) der erste Befestigungsbereich (20) und der zweite Befestigungsbereich (21) zur Abdichtung der Kühlvorrichtung (6) mit dem dazwischen angeordneten Endbereich (22) der Folienkühleinrichtung (9) umgebördelt ist, und/oder
c) am Endbereich (22) zur Abdichtung der Kühlvorrichtung (6) eine Dichtlippe befestigt ist.

6. Energiespeichervorrichtung (1) nach einem der Ansprüche 3 bis 5, **dadurch gekennzeichnet, dass** die zweite Wandung (18) Prägungen (23) aufweist, die ausgebildet sind, Kühlmittel innerhalb der Kühlplatte (7) in einen Kühlmittelvorlauf und einen Kühlmittelrücklauf zu leiten.

7. Energiespeichervorrichtung (1) nach Anspruch 6, **dadurch gekennzeichnet,**
a) **dass** der Kühlmittelvorlauf einen an einem Randbereich der Kühlplatte (7) angeordneten Kühlmittelkanal (25) mit einer Mehrzahl dazu orthogonal angeordneter Seitenäste (26) aufweist, und
b) **dass** der Kühlmittelrücklauf einen an einem zum Kühlmittelvorlauf gegenüberliegenden Randbereich angeordneten Kühlmittelkanal (27) mit einer Mehrzahl dazu orthogonal angeordneter Seitenäste (28) aufweist, und
c) **dass** die Seitenäste (26) des Kühlmittelvorlaufs und die Seitenäste (28) des Kühlmittelrücklaufs derart ineinander verschränkt sind, dass ein Seitenast (26) des Kühlmittelvorlaufs immer unmittelbar benachbart zu einem Seitenast (28) des Kühlmittelrücklaufs angeordnet ist, wobei die Seitenäste (26) des Kühlmittelvorlaufs und die Seitenäste (28) des Kühlmittelrücklaufs der Kühlplatte (7) vorzugsweise über die Kühlkörper (8) fluidisch miteinander in Verbindung stehen.

8. Energiespeichervorrichtung (1) nach einem der vorhergehenden Ansprüche, **dadurch gekennzeichnet, dass** die Folienkühleinrichtung (9)
a) eine Aluminium-Folie und/oder eine Kunststoffbeschichtung umfasst; und/oder
b) als eine durchgängige und/oder einstückige Folie ausgebildet ist.

9. Energiespeichervorrichtung (1) nach einem der vorherigen Ansprüche, **dadurch gekennzeichnet, dass** zumindest einer der Kühlkörper (8) mindestens einen Falz (11) oder mindestens eine Prägung aufweist, der oder die ausgebildet ist, einen Innenraum des Kühlkörpers (8) in fluidisch miteinander verbundene Teilräume (13, 14) zu unterteilen, um Kühlmittel bogenförmig, U-förmig oder mäanderförmig von einem Kühlmitteleingang (15) des Kühlkörpers (8) zu einem Kühlmittellausgang (16) des Kühlkörpers (8) zu leiten.

10. Energiespeichervorrichtung (1) nach einem der vorhergehenden Ansprüche, **dadurch gekennzeichnet, dass** zumindest einer der Kühlkörper (8) zumindest teilweise von einem zwischen benachbarten Speicherzellen (3, 4, 5) angeordneten, vorzugsweise in Form der Buchstaben "M" oder "n" ausgebildeten, Druckrahmen (29), vorzugsweise einen Kunststoff-Druckrahmen (29), umgeben ist, der zur Aufnahme von Kräften, vorzugsweise zur Aufnahme von Verpresskräften, zwischen benachbarten Speicherzellen (3, 4, 5), ausgebildet ist, wobei der Druckrahmen (29)
a) an einem Rand des Kühlkörpers (8) befestigt ist, vorzugsweise an einer äußeren Randprägung oder Randfalz (12) des Kühlkörpers (8) durch eine Umspritzung befestigt ist; oder
b) lose an dem Kühlkörper (8) anliegt und durch Verpressung der benachbarten Speicherzellen (3, 4, 5) in Position gehalten ist.

11. Energiespeichervorrichtung (1) nach einem der vorhergehenden Ansprüche, wobei auf der Kühlplatte der Kühlvorrichtung mindestens zwei nebeneinander angeordnete Stapel von Speicherzellen angeordnet sind und die Folienkühleinrichtung (9) korrespondierend zur Anzahl der nebeneinander angeordneten Stapel von Speicherzellen eine korrespondierende Anzahl von seitlich benachbart zueinander angeordneten Kühlkörper-Stapeln aufweist.

12. Fahrzeug, vorzugsweise Nutzfahrzeug, aufweisend die Energiespeichervorrichtung (1) nach einem der vorhergehenden Ansprüche.

13. Verfahren zur Herstellung der Energiespeichervorrichtung (1) nach Anspruch 4, **gekennzeichnet durch** den Schritt:
Hindurchstecken der Kühlkörper (8) durch die Schlitze der Schlitzstruktur (19) bis die Folienkühleinrichtung (9) an einer den Speicherzellen (3, 4, 5) abgewandten Seite der ersten Wandung (17) abschnittsweise flächig anliegt.

14. Verfahren nach Anspruch 13 zur Herstellung der Energiespeichervorrichtung nach Anspruch 5, **gekennzeichnet durch** den Schritt:
Befestigen der Folienkühleinrichtung (9) zwischen der ersten Wandung (17) und der zweiten Wandung (18) mittels Klemmen des Endbereichs (22) zwischen den ersten Befestigungsbereich (20) und den zweiten Befestigungsbereich (21) und/oder mittels Umbördeln des ersten Befestigungsbereichs (20) und des zweiten Befestigungsbereichs (21) mit dem dazwischen angeordneten Endbereich (22) der Folienkühleinrichtung (9) und/oder mittels einer am Endbereich (22) zur Abdichtung der Kühlvorrichtung befestigten Dichtlippe.

15. Verfahren nach Anspruch 14, **dadurch gekennzeichnet, dass** das Hindurchstecken mittels Montageschwerter (30) erfolgt, auf welche die Kühlkörper (8) vor dem Hindurchstecken aufgestülpt werden und welche nach dem Hindurchstecken wieder herausgezogen werden.
